# EUROPEAN PATENT APPLICATION

(11) **EP 4 603 640 A1**
(43) Date of publication of application: **20.08.2025**
(21) Application number: 25156888.7
(22) Date of filing: 10.02.2025
(51) Int. Cl.: E02B 3/04, A01K 61/73, E02B 17/00

(54) **BIODIVERSITY-ENHANCING CONSTRUCTION ELEMENT FOR EROSION PROTECTION, MANUFACTURE, APPLICATION AND USE THEREOF**

(30) Priority: 13.02.2024 NL 2037016
(71) Applicant: Advanced Tower Systems B.V., 7521 PT Enschede (NL)
(72) Inventor: Schouten, Jorrit, 7512 DJ Enschede (NL); Roody, Batool Soleimani, 7522 DD Enschede (NL); Raspoort, Anne Jeske, 3039 ZE Rotterdam (NL)
(74) Representative: 't Jong, Bastiaan Jacob

(57) **Abstract**

The invention relates to an element for enhancing biodiversity in and/or around a structure for protecting against soil erosion placed under water, which element comprises a main body with an outer surface, which main body comprises at least one, preferably a plurality of the shape characteristics selected from:
- a through-hole which extends through the main body from a first part of the outer surface to a second part of the outer surface;
- a recess, such as for instance a dent, concavity, depression or indentation; and
- a protrusion, such as for instance a ridge, lump, protuberance or buildup,
wherein at least one surface characteristic is configured to form an artificial dwelling place or hiding place for an animal that can live under water.

In a second aspect the invention also relates to a method for manufacturing an element according to the invention. In a third aspect the invention also relates to an element obtainable by means of the method according to the second aspect. In a fourth aspect the invention also relates to an assembly for protecting against soil erosion. In a fifth aspect the invention also relates to a method for arranging an assembly according to the fourth aspect on a ground surface in a body of water, such as for instance a bottom or an already prepared substrate such as a filter layer. In a sixth aspect the invention also relates to a kit-of-parts for application of a method according to the fifth aspect.

## Description

The invention relates to an element for enhancing the biodiversity in and/or around a structure placed under water for protecting against soil erosion.

In a second aspect the invention also relates to a method for manufacturing an element according to the invention. In a third aspect the invention also relates to an element obtainable by means of the method according to the second aspect. In a fourth aspect the invention also relates to an assembly for protecting against soil erosion. In a fifth aspect the invention also relates to a method for arranging an assembly according to the fourth aspect on a ground surface in a body of water, such as for instance a bottom or an already prepared substrate such as a filter layer. In a sixth aspect the invention also relates to a kit-of-parts for application of a method according to the fifth aspect.

Structures providing protection against soil erosion are arranged in order to prevent soil erosion around objects placed in or on the bed of a body of water. This is for instance the case for wind turbines, such as the monopile type, and for anchor beds and other permanent or semi-permanent underwater structures.

It is thus known to deposit a stone or rock protection around a straight mast or pile which is embedded in the bottom at its underside. Erosion, which could weaken the stability of the bottom around the mast, is hereby prevented. For this purpose a straight mast or pile is driven into the bottom, after which a ship manoeuvres around the pile in order to deposit the protection.

A drawback of the existing erosion protection is that the biodiversity does not improve quickly enough following bottom operations and placing of the erosion protection. The erosion protection made of stones and rocks is not suitable for rapid recovery of the biodiversity on the bottom, while the stones and rocks do offer effective protection against soil erosion.

It is now an object of the invention to reduce or even wholly obviate the above stated drawback.

This object is achieved in a first aspect according to the invention by providing an element for enhancing biodiversity in and/or around a structure for protecting against soil erosion placed under water, which element comprises a main body with an outer surface, which main body comprises at least one, preferably a plurality of the shape characteristics selected from:
- a through-hole which extends through the main body from a first part of the outer surface to a second part of the outer surface;
- a recess, such as for instance a dent, concavity, depression or indentation; and
- a protrusion, such as for instance a ridge, lump, protuberance or buildup,
wherein at least one shape characteristic is configured to form an artificial dwelling place or hiding place for an animal that can live under water.

The element according to the invention is suitable to be applied as structural element in structures for preventing soil erosion. The element has no buoyancy and can therefore be submerged to the bottom of a body of water in simple manner.

The element has a main body with an outer surface, which main body is provided with shape characteristics to provide biodiversity-enhancing properties. A shape characteristic is arranged during forming of the main body or by further processing thereof. Multiple types of shape characteristic are provided, wherein the element is provided with at least one of these types of shape characteristic, but preferably with a plurality thereof and with multiple types thereof.

A first type of shape characteristic is a through-hole which extends through the main body from a first part of the outer surface to a second part of the outer surface. The through-hole can be straight, but can also have a curvature. Live animals, such as for instance fish, crustaceans or molluscs living close to the bottom, can find shelter in a through-hole. A main dimension of the hole, such as for instance the diameter, can here be selected in accordance with a preferred size known for a determined animal species.

A second type of shape characteristic is a recess, such as for instance a dent, concavity, depression or indentation. A recess can here take the form of a blind hole, wherein the depth of the recess is greater than the diameter, but more superficial recesses can also be applied. Animals can hide in the recess and can benefit from the reduced current. A main dimension of the recess, such as for instance the diameter or depth, can here be selected in accordance with a preferred size known for a determined animal species.

A third type of shape characteristic is a protrusion, such as for instance a ridge, lump, protuberance or buildup. Animals or organisms can grip onto or easily attach themselves to a protrusion.

An additional advantage of the shape characteristics can be that partial interlocking of adjacent structural elements can take place, this increasing the stability of the whole. For instance elements with each other or elements with stones and/or rocks.

An important feature of the element according to the invention is that at least one shape characteristic forms an artificial dwelling place or hiding place for an animal that can live under water. This increases the chances of organisms living under water settling in and/or around the element, whereby the biodiversity can be improved. The dwelling place or hiding place can for instance serve for a fish living close to the bottom, such as for instance a flatfish or codfish, and/or a bottom-dweller such as for instance a worm, lobster, crab, mussel, snail, slug, shrimp and/or starfish.

An element according to the invention preferably has a maximum dimension of 0.4 m, making the element suitable for being submerged in conventional manner. In order to prevent displacement due to current the element preferably has a weight of a minimum of 46 kg here.

In an embodiment of an element according to the invention the element is manufactured from a curing, mouldable material, such as for instance concrete or clay, with a higher density than water.

Applying a curing, mouldable material enables complex shapes to be manufactured in simple manner. The material is here preferably also selected to be an enhancement for biodiversity, such as an acidity corresponding with or suitable for the application location.

Another embodiment of an element according to the invention is an element wherein at least a part of the outer surface and/or at least a part of the surface of at least one shape characteristic is high in calcium.

Providing a surface high in calcium on the outer surface and/or on a shape characteristic, for instance in the form of a surface coating or plaster layer, enhances attachment to these calcium-rich surfaces by animals that are attracted thereto, such as for instance oyster or mussel larvae. It can thus be ensured that animals attach mainly there where the element provides shelter.

Also according to the invention is an embodiment of an element wherein the outer surface is substantially a polyhedron.

With a polyhedron a variety of different surfaces can be formed, whereby the element can potentially also enhance many different types of organism. This need not be a purely geometric polyhedron, but a polyhedron should in any case be recognizable for a substantial part of the main shape of the main body.

In yet another embodiment of an element according to the invention at least one shape characteristic of the element has a main dimension in the range of 4-25 cm, preferably 6-15 cm.

With a main dimension, such as a diameter of depth, of the at least one shape characteristic in the stated range a hiding place or attaching place is formed for species commonly found to live close to the bottom, such as for instance lobsters, crabs, but also fish such as codfish

Another embodiment of an element according to the invention is an element wherein the outer surface of the main body is also provided with at least one surface characteristic, which at least one surface characteristic is formed by a relief, such as a structured surface.

By also arranging comparatively smaller surface characteristics on the outer surface in addition to the already stated shape characteristics an even greater variety in the enhancement of biodiversity can be obtained. The surface characteristics can enhance attachment of crustaceans and/or molluscs. Early-stage larvae can for instance also gain a grip thereon. The surface characteristics thus preferably also form an artificial dwelling place or hiding place for smaller animals that can live under water. When a surface high in calcium is also provided in addition to the surface characteristics, the calcium-rich surface is in relation to the surface characteristics preferably only provided in the grooves of the relief in order to enhance attachment of larvae therein.

Yet another embodiment of an element according to the invention is an element wherein at least one surface characteristic overlaps with at least one shape characteristic.

Another embodiment of an element according to the invention is an element wherein the depth of the relief is 1-15% of the main dimension of a shape characteristic, the depth more preferably being smaller than 20 mm, with strong preference smaller than 10 mm.

The relief of a surface characteristic is much smaller than the main dimension of a shape characteristic. With a depth in the range of 1-15% of the main dimension of a shape characteristic, a surface characteristic is characteristically a surface structure, i.e. a structured surface instead of a shape-defining characteristic of the main body. With a depth smaller than 20 mm, or even smaller than 10 mm, the relief is highly suitable for for instance oysters to attain attachment. The edges of the relief are preferably rounded, this in order to reduce sedimentation in the relief.

The two types of surface characteristic need not be arranged on different parts of the outer surface of the main body. Surface characteristics can also continue on in or be placed wholly in a shape characteristic, whereby the smaller surface characteristics are also applied in the sheltering location or on gripping elements.

In a preferred embodiment of an element according to the invention the element is provided with at least one live animal that can live under water.

By providing the element with at least one live animal, which is also able to live at the intended application location of the element, a considerable increase in biodiversity can be achieved. After being applied under water, the elements need hereby not first be found by organisms or animals already present in the water, but will already immediately be in use by animals. This increases the chances of the animals and related organisms establishing themselves permanently at the application location.

In a second aspect the invention also relates to a method for manufacturing an element according to the invention, comprising the step of providing in and/or on the element at least one live animal that can live under water.

In a preferred embodiment of a method according to the invention the element is provided here with at least one live animal by temporarily immersing the element in a body of water in which live animals are present, such as for instance a basin in which live animals are present, such as for instance farmed and/or captured animals.

Temporarily immersing the element in a body of water in which live animals are present, which animals can nestle in and/or attach to the element, enables the element to be loaded with live animals.

In a basin, even greater control can be gained here over both the amount and the species. This can be adapted to a desired change in biodiversity close to the application location of the elements.

Another embodiment of a method according to the invention is a method wherein the element is provided with at least one live animal by attaching the at least one live animal to the element with an adhesive, wherein the adhesive provides at least a temporary mutual adhesion between the element and the at least one live animal.

A live animal can be attached to the element by means of an adhesive, such as for instance a glue, mastic, bonding cement or gel. For instance molluscs. Because the adhesive provides at least a temporary mutual bond, it can be ensured that the animals attached in this way will not detach unintentionally while being submersed. A membrane or gel which dissolves and/or degrades in the water can for instance also be used as temporary adhesive. After submersion, the animals attached in the temporary adhesive can then detach from the element over time.

In a third aspect the invention also relates to an element obtainable by means of the method according to the second aspect.

In a fourth aspect the invention also relates to an assembly for protecting against soil erosion, comprising:
- a cover layer of stones and/or rocks deposited on a ground surface in a body of water, such as for instance a bottom; and
- a plurality of elements according to the invention, arranged on the cover layer.

The primary function of protecting against soil erosion can be achieved with the cover layer of stones and/or rocks already proven in practice. By arranging elements according to the invention thereon the existing anti-erosion structures are improved with biodiversity-enhancing properties by the elements. The natural stones and/or rocks are thus supplemented by artificially manufactured elements. This allows costs to remain low. The same vessels that arrange the existing cover layers can also place an assembly according to the invention without any major modifications. In some cases interlocking of elements according to the invention with adjacent stones, rocks and/or other element according to the invention can also improve the anti-erosion properties of the existing anti-erosion structure, in that a stronger structural cohesion is formed. An assembly according to the invention can also be referred to as a combination.

In an alternative embodiment of an assembly according to the invention the cover layer also comprises a plurality of elements according to the invention.

Elements according to the invention can also be added to the cover layer. In addition to the biodiversity-enhancing properties of the elements, this can also result in a better cohesion in the cover layer in that the elements and the stones and/or rocks engage partially in each other, particularly owing to the shape characteristics of the elements.

In a fifth aspect the invention also relates to a method for arranging an assembly according to the fourth aspect on a ground surface in a body of water, such as for instance a bottom or an already prepared substrate such as a filter layer, comprising the steps of:
- providing stones and/or rocks;
- providing elements according to the invention;
- submerging a cover layer to the ground surface, which cover layer comprises the stones and/or rocks; and
- submerging the elements to and/or with the cover layer.

Providing the elements with the cover layer improves the biodiversity-enhancing quality of the obtained cover layer. The elements can additionally or alternatively also be submerged to the cover layer. The final layer is here preferably composed of elements according to the invention, so that the elements are easily accessible to organisms such as animals. The higher current speed along the layer placed last or upper layer decreases the chances of sedimentation, making the shape characteristics less likely to become silted up, so that they can serve for longer.

In a sixth aspect the invention also relates to a kit-of-parts for application of a method according to the fifth aspect, the kit-of-parts comprising a first plurality of stones and/or rocks and a second plurality of elements according to the invention.

The method according to the fifth aspect can be applied in simple manner with a kit-of-parts assembled according to this aspect.

These and other features of the invention are further elucidated with reference to the accompanying drawings.
Figure 1 shows a perspective view of an assembly according to the invention with an omitted segment.
Figure 2 shows a perspective view of a first embodiment of an element according to the invention.
Figure 3 shows a perspective view of a second embodiment of an element according to the invention.

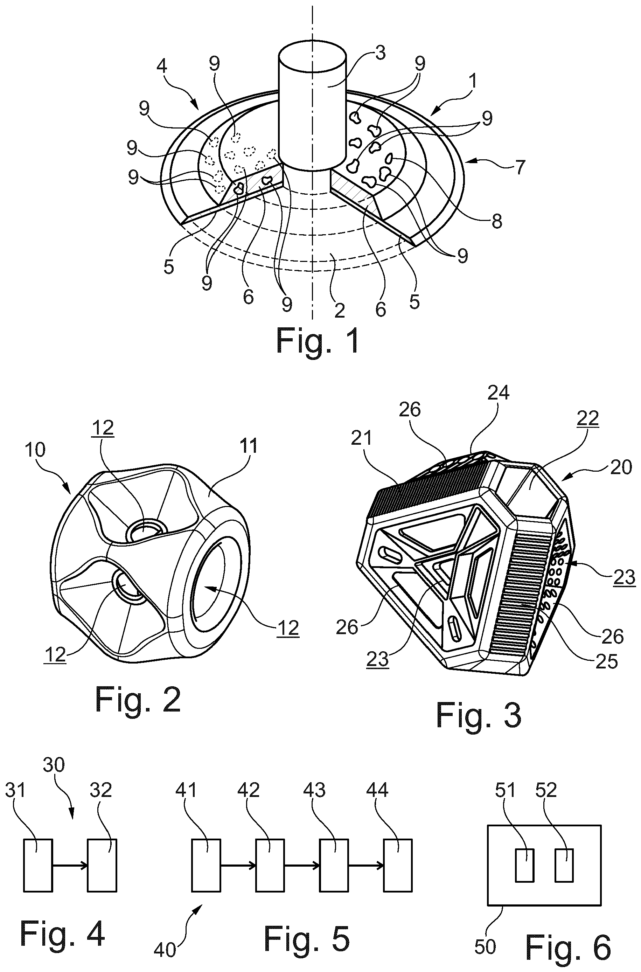

Figure 1 shows an assembly 1 according to the invention, wherein a mast 3 of a monopile wind turbine is embedded in a bottom 2 of a body of water. All around mast 3, two layers 5, 6 are arranged on the left-hand side 4 thereof, and three layers 5, 6, 8 are arranged on the right-hand side 7 thereof. The bottom layer is a filter layer 5, arranged on the bottom 2. Because a part of the layers has been cut away, the composition can be clearly recognized.

On left-hand side 4 a cover layer 6 is arranged on top of filter layer 5. The cover layer 6 comprises stones and/or rocks. Elements 9 according to the invention have also been added to the cover layer.

To the right 7 of the broken line a third layer 8 has been provided on top of the cover layer 6. The third layer 8 consists of elements 9 according to the invention. Cover layer 6 can consist wholly of stones and/or rocks, but can alternatively also be embodied just as the cover layer 6 as shown on the left 4.

Figure 2 shows a perspective view of a first embodiment of an element 10 according to the invention. The main body is provided with a plurality of shape characteristics. The element 10 is substantially a polygon with rounded sides. A plurality of through-holes 12 are arranged, which extend through the main body from a first part of outer surface 11 to a second part of outer surface 11. The through-holes 12 are shape characteristics. The formed cavities are highly suitable to serve as hiding place for an animal living under water.

Figure 3 shows a perspective view of a second embodiment of an element 20 according to the invention. The main body of element 20 is provided with a plurality of shape characteristics of different types. A through-hole 22 which extends through the main body has thus been arranged. Recesses 23 have also been arranged. Visible on the rear side is a protrusion 24. The through-hole 22, the recesses 23 and the protrusion 24 are shape characteristics. The cavities formed by the hole 22 and the recesses 23 are highly suitable to serve as hiding place for an animal living under water. The relief of the surface characteristics in the form of a structured surface 25, 26 is also arranged on the outer surface 21. A part of the surface characteristics 26 overlap with the shape characteristics 23, 24.

The examples of embodiments 10, 20 shown in figures 2 and 3 clearly show that many distinctive shapes can be provided for forming an element according to the invention. Although the specific shape can have advantages, for instance in relation to the ability to mould during manufacture or the stability, the enhancement of biodiversity is determined mainly by the shape and surface characteristics.

Figure 4 shows a flow diagram 30 of an embodiment of a method for manufacturing an element according to the invention. The method consists of the step 31 of providing an element according to the invention, wherein a live animal that can live under water is then 32 provided in and/or on the element. This step 32 can for instance be completed by temporarily immersing the element in a basin. The basin can then be provided with farmed animals.

Figure 5 shows a flow diagram 40 of an embodiment of a method for arranging an assembly according to the invention on a bottom in a body of water. The method comprises the step 41 of providing stones and/or rocks and the step 42 of providing elements according to the invention. The stones and/or rocks are then 43 submerged to the bottom for the purpose of forming a cover layer. In a step 44, which can be performed entirely separately of, partially simultaneously with or wholly simultaneously with step 43, the elements are submerged.

Figure 6 shows schematically a kit-of-parts 50 for application of a method according to the invention. This kit-of-parts 50 comprises a first plurality of stones and/or rocks 51 and a second plurality of elements 52 according to the invention.

## Claims

1. An element for enhancing biodiversity in and/or around a structure for protecting against soil erosion placed under water, which element comprises a main body with an outer surface, which main body comprises at least one, preferably a plurality of the shape characteristics selected from:
- a through-hole which extends through the main body from a first part of the outer surface to a second part of the outer surface;
- a recess, such as for instance a dent, concavity, depression or indentation; and
- a protrusion, such as for instance a ridge, lump, protuberance or buildup,
wherein at least one shape characteristic is configured to form an artificial dwelling place or hiding place for an animal that can live under water.

2. Element according to claim 1, manufactured from a curing, mouldable material, such as for instance concrete or clay, with a higher density than water.

3. Element according to claim 1 or 2, wherein at least a part of the outer surface and/or at least a part of the surface of at least one shape characteristic is high in calcium.

4. Element according to any one of the foregoing claims, wherein at least one shape characteristic has a main dimension in the range of 4-25 cm, preferably 6-15 cm.

5. Element according to any one of the foregoing claims, wherein the outer surface of the main body is also provided with at least one surface characteristic, which at least one surface characteristic is formed by a relief, such as a structured surface.

6. Element according to claim 5, wherein at least one surface characteristic overlaps with at least one shape characteristic.

7. Element according to claim 5 or 6, wherein the depth of the relief is 1-15% of the main dimension of a shape characteristic, the depth more preferably being smaller than 20 mm, with strong preference smaller than 10 mm.

8. Element according to any one of the foregoing claims, provided with at least one live animal that can live under water.

9. A method for manufacturing an element according to any one of the foregoing claims, comprising the step of providing in and/or on the element at least one live animal that can live under water.

10. Method according to claim 9, wherein the element is provided with at least one live animal by temporarily immersing the element in a body of water in which live animals are present, such as for instance a basin in which live animals are present, such as for instance farmed and/or captured animals.

11. Method according to claim 9 or 10, wherein the element is provided with at least one live animal by attaching the at least one live animal to the element with an adhesive, wherein the adhesive provides at least a temporary mutual adhesion between the element and the at least one live animal.

12. An element obtainable by means of the method according to claim 9, 10 or 11.

13. An assembly for protecting against soil erosion, comprising:
- a cover layer of stones and/or rocks deposited on a ground surface in a body of water, such as for instance a bottom; and
- a plurality of elements according to any one of the claims 1-8 or 12, arranged on the cover layer.

14. Assembly according to claim 13, wherein the cover layer also comprises a plurality of elements according to any one of the claims 1-8 or 12.

15. A method for arranging an assembly according to claim 13 or 14 on a ground surface in a body of water, such as for instance a bottom or an already prepared substrate such as a filter layer, comprising the steps of:
- providing stones and/or rocks;
- providing elements according to any one of the claims 1-8 or 12;
- submerging a cover layer to the ground surface, which cover layer comprises the stones and/or rocks;
- submerging the elements to and/or with the cover layer.

16. A kit-of-parts for application of a method according to claim 15, comprising a first plurality of stones and/or rocks and a second plurality of elements according to any one of the claims 1-8 or 12.
